# EUROPEAN PATENT APPLICATION

(11) **EP 4 474 416 A1**
(43) Date of publication of application: **11.12.2024**
(21) Application number: 23178492.7
(22) Date of filing: 09.06.2023
(51) Int. Cl.: C08K 3/04, C08K 3/32, C08K 5/00, C08K 5/098, C08K 5/3435, C08K 5/3462, C08K 5/52, C08K 7/14

(54) **POLYPROPYLENE COMPOSITION HAVING INTUMESCENT FLAME RETARDANT AND IMPROVED UV STABILIZATION**

(71) Applicant: Borealis AG, 1020 Vienna (AT)
(72) Inventor: ROMANENKO, Yuliia, 4021 Linz (AT); GITSAS, Antonios, 4021 Linz (AT); STOCKREITER, Wolfgang, 4021 Linz (AT); COSTA, Francis Reny, 4021 Linz (AT); SCHÜTZ, Florian, 1020 Vienna (AT)
(74) Representative: Ter Meer Steinmeister & Partner

(57) **Abstract**

The present invention relates to a polypropylene composition comprising a polymer of propylene, a halogen-free flame retardant containing nitrogen and phosphorus, a pigment and additives, wherein the additives comprise at least one hindered amine light stabilizer (HALS) containing at least one ester-group and at least one acid scavenger. The present invention is, furthermore, directed to an article comprising the polypropylene composition, and to the improvement of the UV stability of a polypropylene composition comprising a halogen-free flame retardant containing nitrogen and phosphorus.

## Description

### Field of the invention

The present disclosure relates to a polypropylene composition, an article comprising the polypropylene composition, and to the improvement of the UV stability of a polypropylene composition comprising a halogen-free flame retardant containing nitrogen and phosphorus.

### Technical background

In outdoor use, articles comprised of polymer materials have to withstand weather conditions which can be extreme in some geographical regions. UV light resistance and mechanical stability at temperatures which may vary within a wide range are, in particular, required. Long-term thermal stability, especially at high temperatures, is often needed. For articles comprising a polymer material like polypropylene (PP) this is usually achieved through incorporation of UV stabilisers, antioxidants and other additives. Besides that, many applications require that polymer materials fulfil certain flammability standards. Therefore, it is not uncommon that polymer materials further comprise considerable amounts of at least one flame retardant. However, it is known that some flame retardants interact with UV stabilisers and cause their deterioration. Hence, there is a need to improve the degree of UV stabilisation, especially of polypropylene compositions comprising flame retardants.

CN106366443B discloses a long-glass-fibre-enhanced polypropylene material comprising flame retardant, thermal stabiliser and lubricant. The material comprises a light stabilizer selected from hindered amine light stabilisers (HALS), salicylate ultraviolet absorbents, benzophenone ultraviolet absorbents, benzotriazole ultraviolet absorbents and triazine ultraviolet absorbents.

### Summary of the Invention

The UV stability of a polypropylene composition comprising halogen-free flame retardant containing nitrogen and phosphorus is improved by incorporating a particular combination of UV stabilisers, namely a combination comprising at least (i) hindered amine light stabilizer (HALS) containing at least one ester-group and (ii) acid scavenger. The hindered amine light stabilizer containing at least one ester-group is also referred to as ester-HALS.

The present disclosure also provides a polypropylene composition having improved UV stability and an article comprising the polypropylene composition.

### Detailed Description

The present disclosure provides a polypropylene composition comprising
(a) 20 to 75 wt.-% of a polymer of propylene,
(b) 20 to 30 wt.-% of a halogen-free flame retardant containing nitrogen and phosphorus,
(c) 0.2 to 2.0 wt.-% of a pigment, and
(d) 0.2 to 5.0 wt.-% of additives,

based on the total amount (100 wt.-%) of the polypropylene composition;
wherein the additives (d) comprise
(d1) 0.1 to 1.0 wt.-% of at least one hindered amine light stabilizer (HALS) containing at least one ester-group, and
(d2) 0.1 to 1.0 wt.-% of at least one acid scavenger,
based on the total amount (100 wt.-%) of the polypropylene composition.

Without wishing to be bound by theory it is believed that the at least one acid scavenger acts to protect the HALS containing ester-groups against the detrimental effects of the halogen-free flame retardant containing nitrogen and phosphorus. Such a flame retardant has a high acidity and, thus, readily catalyses the hydrolysis of ester-groups within the HALS under wet or slightly humid conditions.

In an embodiment, the polypropylene composition comprises
(a) 20 to 75 wt.-% of a polymer of propylene,
(b) 20 to 30 wt.-% of a halogen-free flame retardant containing nitrogen and phosphorus,
(c) 0.2 to 2.0 wt.-% of a pigment, and
(d) 0.2 to 5.0 wt.-% of additives,

based on the total amount (100 wt.-%) of the polypropylene composition;
wherein the additives (d) comprise
(d1) 0.1 to 1.0 wt.-% of at least one hindered amine light stabilizer containing at least one ester-group,
(d2) 0.1 to 1.0 wt.-% of at least one acid scavenger,
(d3) 0.1 to 0.8 wt.-% of at least one UV absorber comprising phenolic hydroxyl groups,
(d3) optionally, 0.1 to 0.5 wt.-% of at least one antioxidant, and
(d4) optionally, 0.1 to 0.5 wt.-% of at least one metal deactivator,
based on the total amount (100 wt.-%) of the polypropylene composition.

Preferably, the polypropylene composition is a glass fibre reinforced polypropylene composition. In this case the polypropylene composition may comprise
(a) 20 to 60 wt.-% of a polymer of propylene,
(aa) 10 to 50 wt.-% glass fibres,
(ab) 1 to 5 wt.-% of an adhesion promoter,
(b) 20 to 30 wt.-% of a halogen-free flame retardant containing nitrogen and phosphorus,
(c) 0.2 to 2.0 wt.-% of a pigment, and
(d) 0.2 to 5.0 wt.-% of additives,
based on the total amount (100 wt.-%) of the polypropylene composition;
wherein the additives (d) comprise
(d1) 0.1 to 1.0 wt.-% of at least one hindered amine light stabilizer containing at least one ester-group, and
(d2) 0.1 to 1.0 wt.-% of at least one acid scavenger,
based on the total amount (100 wt.-%) of the polypropylene composition.

When the polypropylene composition is a glass fibre reinforced polypropylene composition, the polypropylene (a) preferably has a melt flow rate MFR₂ (230 °C), measured according to ISO 1133, of not lower than 60 g/lOmin, preferably in the range of 60 to 1000 g/lOmin, more preferably in the range of 60 to 500 g/10min, still more preferably in the range of 60 to 200 g/10min.

In a further preferred embodiment, the polypropylene composition is a glass fibre reinforced polypropylene composition and comprises
(a) 20 to 60 wt.-% of a polymer of propylene,
(aa) 10 to 50 wt.-% glass fibres,
(ab) 1 to 5 wt.-% of an adhesion promoter,
(b) 20 to 30 wt.-% of a halogen-free flame retardant containing nitrogen and phosphorus,
(c) 0.2 to 2.0 wt.-% of a pigment, and
(d) 0.2 to 5.0 wt.-% of additives,
based on the total amount (100 wt.-%) of the polypropylene composition;
wherein the additives (d) comprise
(d1) 0.1 to 1.0 wt.-% of at least one hindered amine light stabilizer containing at least one ester-group,
(d2) 0.1 to 1.0 wt.-% of at least one acid scavenger,
(d3) 0.1 to 0.8 wt.-% of at least one UV absorber comprising phenolic hydroxyl groups,
(d3) optionally, 0.1 to 0.5 wt.-% of at least one antioxidant, and
(d4) optionally, 0.1 to 0.5 wt.-% of at least one metal deactivator,
based on the total amount (100 wt.-%) of the polypropylene composition.

Also, the polypropylene composition according to the present invention may be a glass fibre reinforced polypropylene composition comprising
(a) 20 to 60 wt.-% of a polymer of propylene,
(aa) 10 to 50 wt.-% glass fibres,
(ab) 1 to 5 wt.-% of an adhesion promoter,
(b) 20 to 30 wt.-% of a halogen-free flame retardant containing nitrogen and phosphorus,
(c) 1.5 to 15 wt.-%, preferably 2.0 to 10 wt.-%, of a pigment masterbatch, and
(d) 0.2 to 5.0 wt.-% of additives,
based on the total amount (100 wt.-%) of the polypropylene composition;
wherein the additives (d) comprise
(d1) 0.1 to 1.0 wt.-% of at least one hindered amine light stabilizer containing at least one ester-group,
(d2) 0.1 to 1.0 wt.-% of at least one acid scavenger,
(d3) 0.1 to 0.8 wt.-% of at least one UV absorber comprising phenolic hydroxyl groups,
(d3) optionally, 0.1 to 0.5 wt.-% of at least one antioxidant, and
(d4) optionally, 0.1 to 0.5 wt.-% of at least one metal deactivator,
based on the total amount (100 wt.-%) of the polypropylene composition.

### Polymer of propylene (a)

The polypropylene composition of the present disclosure comprises 20 to 75 wt.-%, preferably 20 to 60 wt.-%, even more preferably 20 to 55 wt.-%, most preferably 30 to 50 wt.-% of a polymer of propylene, based on the total amount (100 wt.-%) of the polypropylene composition. Hereinafter, the "polymer of propylene" (a) is also referred to as "polypropylene" (a).

The polymer of propylene (a) in the present polypropylene composition is characterised by a melt flow rate MFR₂ (230 °C), measured according to ISO 1133, of from 10 to 200 g/lOmin. In the absence of glass fibres in the polypropylene composition, the polymer of propylene preferably has a MFR₂ (230 °C), measured according to ISO 1133, of from 10 to 60 g/10min, preferably of from 15 to 35 g/10min. Alternatively, if the polypropylene composition is a glass fibre reinforced polypropylene composition, the polymer of propylene has a melt flow rate MFR₂ (230 °C), measured according to ISO 1133, of not lower than 60 g/lOmin, preferably in the range of 60 to 1000 g/10min, more preferably in the range of 60 to 500 g/lOmin, still more preferably in the range of 60 to 200 g/10min, particularly in the range of 80 to 150 g/lOmin, like in the range of 90 to 120 g/lOmin.

In a preferred embodiment, the polypropylene (a) is a heterophasic polyolefin composition comprising a matrix (a1) being a propylene polymer, and an elastomer (a2) being a copolymer comprising units derived from propylene, on the one hand, and ethylene and/or an alpha-olefin comprising 4 to 20 carbon atoms, in particular 4 to 10 carbon atoms, on the other hand.

In the context of the present disclosure, the expression "heterophasic" indicates that the elastomer is (finely) dispersed in the matrix. In other words, the elastomer forms inclusions in the matrix. Thus, the matrix contains (finely) dispersed inclusions being not part of the matrix and said inclusions contain the elastomer. The term "inclusion" is meant to indicate that the matrix and the inclusions form different phases within the heterophasic polypropylene. Said inclusions are visible, for instance, by high resolution microscopy methods like electron microscopy or scanning-force microscopy.

Heterophasic polyolefin compositions generally feature a xylene cold soluble (XCS) fraction and a xylene cold insoluble (XCI) fraction. In the context of the present disclosure, the xylene cold soluble (XCS) fraction of the heterophasic polyolefin compositions is essentially identical with the elastomer of said heterophasic polyolefin compositions.

Accordingly, when talking about the intrinsic viscosity and the ethylene content of the elastomer of the heterophasic polyolefin compositions, the intrinsic viscosity and the ethylene content of the xylene cold soluble (XCS) fraction of said heterophasic polyolefin compositions are meant.

Accordingly, the matrix (a1) content, i.e., the xylene cold insoluble (XCI) content in the polypropylene (a) being a heterophasic polyolefin composition is preferably in the range of 75.0 to 93.0 wt.-%, more preferably in the range of 77.0 to 91.0 wt.-%, like 78.0 to 89.0 wt.-%.

On the other hand, the elastomer (a2), i.e., the xylene cold soluble (XCS) content in the polypropylene (a) being a heterophasic polyolefin composition is preferably in the range of 7.0 to 25.0 wt.-%, more preferably in the range of 9.0 to 23.0 wt.-%, like in the range of 11.0 to 22.0 wt.-%.

Polypropylenes suitable for use as matrix (a1) may include any type of isotactic or predominantly isotactic polypropylene homopolymer or random copolymer known in the art. Thus, the polypropylene may be a propylene homopolymer or an isotactic random copolymer of propylene with ethylene and/or C4 to C8 alpha-olefins, such as for example 1-butene, 1-hexene or 1-octene, wherein the total co-monomer content ranges from 0.05 to 10 wt.-%.

Preferably, the polypropylene matrix (a1) has a rather high melt flow rate. Accordingly, it is preferred that in the present invention the polypropylene matrix (a1), i.e. the xylene cold insoluble (XCI) fraction of the polypropylene (a), has an MFR2 (230 °C), measured according to ISO1133, of from 100.0 to 1500.0 g/10 min, more preferably from 120.0 to 800.0 g/10 min, still more preferably from 140.0 to 600.0 g/10 min, like in the range of from 150.0 to 500.0 g/lOmin.

Furthermore, the polypropylene matrix (a1) can be multimodal or bimodal in view of the molecular weight.

The expression "multimodal" or "bimodal" used throughout the present disclosure refers to the modality of the polymer, i.e. the form of its molecular weight distribution curve, which is the graph of the molecular weight fraction as a function of its molecular weight, and / or the form of its co-monomer content distribution curve, which is the graph of the co-monomer content as a function of the molecular weight of the polymer fractions.

The elastomer (a2) comprises, and preferably consists of, units derivable from (i) propylene and (ii) ethylene and/or at least another C4 to C20 alpha-olefin, like C4 to C10 alpha-olefin. The elastomeric copolymer may additionally contain units derived from a conjugated diene, like butadiene, or a non-conjugated diene, however it is preferred that the elastomeric copolymer consists of units derivable from (i) propylene and (ii) ethylene and/or C4 to C20 alpha-olefins only. Suitable non-conjugated dienes, if used, include straight-chain and branched-chain acyclic dienes, such as 1,4-hexadiene, 1,5-hexadiene, 1,6-octadiene, 5-methyl-1, 4-hexadiene, 3,7-dimethyl-1,6-octadiene, 3,7-dimethyl-1,7-octadiene, and the mixed isomers of dihydromyrcene and dihydro-ocimene, and single ring alicyclic dienes such as 1,4-cyclohexadiene, 1,5-cyclooctadiene, 1,5-cyclododecadiene, 4-vinyl cyclohexene, 1-allyl-4-isopropylidene cyclohexane, 3-allyl cyclopentene, 4-cyclohexene and 1-isopropenyl-4-(4-butenyl) cyclohexane. Multi-ring alicyclic fused and bridged ring dienes are also suitable including tetrahydroindene, methyltetrahydroindene, dicyclopentadiene, bicyclo (2,2,1) hepta-2,5-diene, 2-methyl bicycloheptadiene, and alkenyl, alkylidene, cycloalkenyl and cycloalkylidene norbornenes, such as 5-methylene-2-norbornene, 5-isopropylidene norbornene, 5-(4-cyclopentenyl)-2-norbomene; and 5-cyclohexylidene-2-norbornene. Preferred non-conjugated dienes are 5-ethylidene-2-norbornene, 1,4-hexadiene and dicyclopentadiene.

Accordingly, the elastomer (a2) comprises at least units derivable from propylene and ethylene and may comprise other units derivable from a further alpha-olefins as defined in the previous paragraph. It is preferred that the elastomer (a2) only comprises units derivable from propylene and ethylene and optionally a conjugated diene like butadiene, or a non-conjugated diene as defined in the previous paragraph like 1,4-hexadiene. Thus, an ethylene propylene non-conjugated diene monomer polymer (EPDM) is especially preferred as elastomer (a2), and an ethylene propylene rubber (EPR) is most preferred.

Like the matrix (a1), the elastomer (a2) can be unimodal or multimodal, like bimodal. Concerning the definition of unimodal and multimodal, like bimodal, reference is made to the definition above.

In the present disclosure, the content of units derivable from propylene in the elastomer (a2) is equivalent to the content of propylene detectable in the xylene cold soluble (XCS) fraction. Accordingly, the propylene detectable in the xylene cold soluble (XCS) fraction ranges from 45.0 to 75.0 wt.-%, more preferably 40.0 to 70.0 wt.-%. Thus, in a specific embodiment, the elastomer (a2), i.e., the xylene cold soluble (XCS) fraction, comprises from 25.0 to 65.0 wt.-%, more preferably 30.0 to 60.0 wt.-%, units derivable from ethylene. Preferably the elastomer (a2) is an ethylene propylene non-conjugated diene monomer polymer (EPDM) or an ethylene propylene rubber (EPR), the latter being especially preferred, with a propylene and/or ethylene content as defined in this paragraph.

A further preferred requirement of the present disclosure is that the intrinsic viscosity (IV) of the xylene cold soluble (XCS) fraction of the polypropylene being a heterophasic polyolefin composition is rather low. Accordingly, it is appreciated that the intrinsic viscosity of the xylene cold soluble (XCS) fraction of the polypropylene being a heterophasic polyolefin composition is below 3.5 dl/g, more preferably not more than 3.4 dl/g. Even more preferred, the intrinsic viscosity of the xylene cold soluble (XCS) fraction of the polypropylene being a heterophasic polyolefin composition is in the range of 1.8 to 3.5 dl/g, more preferably in the range 1.9 to 3.4 dl/g, like 2.0 to 3.4 dl/g. The intrinsic viscosity is measured according to ISO 1628 in decalin at 135 °C.

Preferably, the propylene content of the polypropylene (a) is 85.0 to 96.0 wt.-%, more preferably 88.0 to 94.0 wt.-%, based on total weight of polypropylene (a), more preferably based the amount of the matrix (a1) and the elastomeric copolymer (a2) together, in case that the polypropylene (a) is a heterophasic polyolefin composition as defined above.

In an embodiment of the polypropylene composition of the present disclosure, the polymer of propylene (a) is a heterophasic copolymer of propylene. The heterophasic copolymer of propylene may comprise a polypropylene matrix component (a1) and an elastomeric propylene copolymer component (a2) which is dispersed in said polypropylene matrix (a1) and comprises units derived from (i) propylene and (ii) ethylene and/or a C4 to C20 olefin. Preferably, the heterophasic copolymer of propylene has a melt flow rate MFR2 (230 °C/2.16 kg), measured according to ISO 1133, in the range of from 60 to 200 g/lOmin.

Examples of a suitable polymer of propylene include, but are not limited to, BF970MO and BJ400HP, commercially available from Borealis AG, Austria. Such commercially available products may already comprise minor amounts (e.g. up to 2.0 wt.-%, more preferably up to 1.0 wt.-%, based on the total amount of the polymer of propylene) of one or more additives, such as additives (d) as defined below except for a combination of HALS (d1) and acid scavenger (d2).

### Glass fibres (aa)

The polypropylene composition of the present disclosure optionally comprises (aa) 10 to 50 wt.-% of glass fibres, based on the total amount (100 wt.-%) of the polypropylene composition. In one embodiment, the polypropylene composition comprises 14 to 40 wt.-%, preferably 18 to 36 wt.-% of glass fibres based on the total amount (100 wt.-%) of the polypropylene composition.

When glass fibres are present, the improvement in UV stability of the polypropylene composition through presence of acid scavenger is even more pronounced. Without wishing to be bound by theory, it is believed that glass-fibre-filled polypropylene composition allow a higher degree of water penetration into the material due to the presence of multiple micro-defects on the surface. Hence, the ester functionality in the HALS containing at least one ester-group is more prone to hydrolysis through intensive contact with water in glass-fibre-filled polypropylene composition. Accordingly, the protective effect of the at least one acid scavenger is higher and can be more easily traced.

Preferably, the glass fibres (aa) are short glass fibres (SGF), preferably chopped glass fibres or chopped strands, and/or long glass fibres (LGF), preferably long glass fibres obtained from glass rovings. In an embodiment, the glass fibres (aa) are short glass fibres (SGF) or chopped strands. In particular, the glass fibres are short glass fibres (SGF).

The short glass fibres (SGF), in particular chopped glass fibres or chopped strands, used in the polypropylene composition of the present disclosure may be characterized in that they have an average fibre diameter, determined according to ISO 1888:2006(E) method B, of from 9.0 to 15.0 µm, preferably of from 10 to 13 µm. Further, the short glass fibres preferably have an average length measured before melt blending with components of the polypropylene composition (also denoted "initial average length") in the range of from 2.0 to 10.0 mm, more preferably in the range of 2.3 to 9.0 mm, still more preferably in the range of 2.5 to 8.0 mm, like in the range of 3.0 to 7.0 mm. The initial average length of the short glass fibres (SGF), in particular chopped glass fibres or chopped strands, is usually provided by the supplier. Furthermore, the weight average fibre length determined according to FASEP after melt blending with components of the polypropylene composition may be in the range of 0.2 to 1.2 mm, more preferably in the range of 0.25 to 1.0 mm, still more preferably in the range of 0.3 to 0.8 mm. Weight average fibre length and fibre length distribution were determined according to the FASEP (FAser (German; fibre) SEParation) method on injection moulded test specimens prepared in accordance with EN ISO 1873-2. The fibres are separated from the polymer matrix by pyrolysis in a TGA oven (625 °C for glass fibres, 500 °C for carbon fibres) or by solution and physical separation. The separated fibres are suspended in deionized water and the suspension is diluted until the number of fibres and the overlaying of fibres is well balanced. The average fibre length is determined by grey scale image processing on a FASEP 1.9.44.0 (IDM Systems, Darmstadt, Germany) and statistically investigated by calculating average fibre length and fibre length distributions. Accurate results will be achieved for images with a small number of fibre clusters and fibres that were cut in any way. This is achieved by realizing a certain fibre to water fraction. For glass fibres the fraction should be equal of below 30 mg/L, for carbon fibres the fraction should be equal or below 20 mg/L. The number of clusters relative to the free fibres should be below 20% for short fibres and below 15% for long fibres. For evaluation FASEP software (ImageProPlus including FASEP module) is used separating fibres from background, removing dust and other not relevant features, separating fibres if overlaying and measuring automatically the length for each fibre.

Preferably, the short glass fibres (SGF), in particular chopped glass fibres or chopped strands, have an initial aspect ratio (measured before melt blending with components of the polypropylene composition) of 125 to 650, preferably of 150 to 500, more preferably 200 to 450. The aspect ratio is the relation between average length and average diameter of the fibres.

The initial average length and initial average aspect ratio of the short glass fibres (SGF), in particular chopped glass fibres or chopped strands, refer to the values of the raw material as provided by the supplier.

In an embodiment of the polypropylene composition of the present disclosure, the glass fibres (aa) are cut glass fibres having an average fibre diameter, determined according to ISO 1888:2006(E) method B, of from 9.0 to 15.0 µm and an initial average length measured before melt blending with components of the polypropylene composition of from 3.0 to 7.0 mm.

Examples of suitable glass fibres are chopped 3.5 to 4.5 mm E-glass, preferably with a diameter of 10 to 13 µm. Commercial products are 13µm chopped E-glass from Johns Manville Thermoflow CS EC 13 636 with 4.0 mm chopping length or 13 µm chopped E-glass from 3B called 3B-DS2200-13P with 4.0 mm chopping length.

### Adhesion promoter (ab)

The polypropylene composition of the present disclosure optionally comprises (ab) 1 to 5 wt.-% of an adhesion promoter (also denoted as glass fibre compatibilizer), based on the total amount (100 wt.-%) of the polypropylene composition. The adhesion promoter is preferably only present when the polypropylene composition comprises glass fibres.

The adhesion promoter (ab) can be any adhesion promoter suitable for polypropylene based resins. The adhesion promoter is preferably a polar modified polypropylene (PM-PP) homo-or copolymer.

The polar modified polypropylene (PM-PP) homo- or copolymer comprises a low-molecular-weight compound having reactive polar groups. Modified polypropylene homopolymers and copolymers, like copolymers of propylene and ethylene or with other alpha-olefins, e.g., C4 to C10 alpha-olefins, are most preferred, as they are highly compatible with the polypropylene-based resin of the polypropylene composition of the present disclosure.

In terms of structure, the polar modified polypropylene (PM-PP) homo- or copolymer is preferably selected from graft homo- or copolymers. In this context, preference is given to polar modified polypropylene (PM-PP) homo- or copolymers containing groups derived from polar compounds, in particular selected from the group consisting of acid anhydrides, carboxylic acids, carboxylic acid derivatives, primary and secondary amines, hydroxyl compounds, oxazoline and epoxides, and also ionic compounds.

Specific examples of said polar compounds are unsaturated cyclic anhydrides and their aliphatic diesters, and the diacid derivatives. In particular, one can use maleic anhydride and compounds selected from C1 to C10 linear and branched dialkyl maleates, C1 to C10 linear and branched dialkyl fumarates, itaconic anhydride, C1 to C10 linear and branched itaconic acid dialkyl esters, acrylic acid, maleic acid, fumaric acid, itaconic acid and mixtures thereof.

Particular preference is given to use a polypropylene homo- or copolymer grafted with maleic anhydride or acrylic acid as the polar modified polypropylene (PM-PP) homo- or copolymer, *i.e.* the adhesion promoter (ab).

The modified polymer, i.e., the adhesion promoter (ab), can be produced in a simple manner by reactive extrusion of the polymer, for example with maleic anhydride or acrylic acid in the presence of free radical generators (like organic peroxides), as disclosed for instance in US 4,506,056, US 4,753,997 or EP 1 805 238.

Preferred amounts of groups derived from polar compounds in the polar modified polypropylene (PM-PP) homo- or copolymer, i.e. the adhesion promoter, are from 0.5 to 5.0 wt.-%. For example, the amount may be in the range of 0.5 wt.-% to 4.5 wt.-%, preferably in the range of 0.5 wt.-% to 4.0 wt.-%, more preferably in the range of 0.5 wt.-% to 3.5 wt.-%.

Preferred values of the melt flow rate MFR2 (230 °C, 2.16 kg) for the polar modified polypropylene (PM-PP) homo- or copolymer, i.e., for the adhesion promoter, are from 20.0 to 400 g/10 min. It is particularly preferred that the polar modified polypropylene (PM-PP) homo- or copolymer has a melt flow rate MFR2 (230 °C, 2.16 kg) in the range of 40.0 to 300 g/10 min, more preferably in the range of 50.0 to 250 g/10 min.

In an embodiment of the present disclosure, the adhesion promoter (ab) is a maleic anhydride modified polypropylene homo-or copolymer and/or an acrylic acid modified polypropylene homo-or copolymer. Preferably, the adhesion promoter is a maleic anhydride modified polypropylene homopolymer and/or an acrylic acid modified polypropylene homopolymer and preferably a maleic anhydride modified polypropylene homopolymer. For example, suitable polar modified polypropylene (PM-PP) homo- or copolymers include, for example, a polypropylene homopolymer grafted with maleic anhydride (PP-g-MAH) and a polypropylene homopolymer grafted with acrylic acid (PP-g-AA).

The adhesion promoter is preferably present in an amount of 1 to 5 wt.-%, more preferably 1 to 4 wt.-%, most preferably from 1 to 3 wt.-%, based on the total weight of the accordant polypropylene composition.

### Halogen-free flame retardant (HFFR) containing nitrogen and phosphorus (b)

The polypropylene composition of the present disclosure comprises (b) 20 to 30 wt.-% of a halogen-free flame retardant containing nitrogen and phosphorus, based on the total amount (100 wt.-%) of the polypropylene composition. In a preferred embodiment, the polypropylene composition comprises from 20 to 28 wt.-%, preferably from 21 to 26 wt.-%, of a halogen-free flame retardant containing nitrogen and phosphorus, based on the total amount (100 wt.-%) of the polypropylene composition. With these amounts of a halogen-free flame retardant containing nitrogen and phosphorus, a V0 rating the polypropylene composition is readily achieved.

The flame retardant (b) is free of halogens. In other words, it is preferred that the flame retardant (b) does not contain any organic or inorganic compounds containing halogen atoms. As used herein, the term "halogen" refers to the elements of group 17 of the periodic table. Furthermore, the flame retardant (b) is a N,P-based halogen free flame retardant. This means it is a halogen free flame retardant preferably having at least one nitrogen containing moiety and at least one phosphorus containing moiety. The at least one nitrogen containing moiety is preferably selected from the group consisting of ammonium, piperazine, melamine, diamine, amide, derivatives and combinations thereof. The at least one phosphorus containing moiety is preferably selected from the group consisting of phosphate, e.g. orthophosphate; diphosphate; polyphosphate or pyrophosphate, phosphoric acid, polyphosphoric acid, phosphinic acid, phosphorus pentoxide, derivatives and combinations thereof.

It is further preferred that the flame retardant (b) is an intumescent flame retardant.

In an embodiment, the halogen-free flame retardant (b) may comprise at least one nitrogen-containing phosphate, preferably at least one organic nitrogen-containing phosphate. Preferably, said organic nitrogen-containing phosphate is a phosphate of heterocyclic C3-C6, more preferably C3-C4-alkyl or -aryl compounds comprising at least one N-atom.

In some embodiments, the halogen-free flame retardant (b) is or comprises ammonium polyphosphate. Suitable halogen-free flame retardants (b) are commercially available, for instance, Budit 699S from Budensheim, Presafer products: 100A, 100C, and 100D.

Other suitable halogen-free flame retardants (b) include ADK STAB FP-2100JC, ADK STAB FP-2500S, ADK STAB FP-2600U from ADEKA; and PNA 220 from JLS Chemicals.

In most commercial products, the content of nitrogen is in the range of from 18 to 35 wt.-t% and the content of phosphorus is in the range of from 16 to 25 wt.-%.

According to a particular embodiment of the present disclosure, the halogen-free flame retardant (b) comprises a first nitrogen-containing phosphate (P1) and a second nitrogen-containing phosphate (P2) different from the first nitrogen-containing phosphate (P1).

In this particular embodiment, the first nitrogen-containing phosphate (P1) and the second nitrogen-containing phosphate (P2) may be organic nitrogen-containing phosphates. It is especially preferred that the first nitrogen-containing phosphate (P1) and the second nitrogen-containing phosphate (P2) are phosphates of heterocyclic C3-C6-, more preferably C3-C4-alkyl or -aryl compounds comprising at least one N-atom.

It is preferred that the first nitrogen-containing phosphate (P1) is an organic nitrogen-containing polyphosphate. More preferably, the first nitrogen-containing phosphate (P1) is a polyphosphate of a heterocyclic C3-C6-, more preferably C3-C4-aryl compound comprising at least one N-atom. It is especially preferred that the first nitrogen-containing phosphate (P1) is melamine polyphosphate.

It is preferred that the second nitrogen-containing phosphate (P2) is an organic nitrogen-containing diphosphate. More preferably, the second nitrogen-containing phosphate (P2) is a diphosphate of a heterocyclic C3-C6-, more preferably C3-C4-alkyl compound comprising at least one N-atom, like two N-atoms. It is especially preferred that the second nitrogen-containing phosphate (P2) is piperazine pyrophosphate.

According to a preferred embodiment of the present invention, the weight ratio between the first nitrogen-containing phosphate (P1) and the second nitrogen-containing phosphate (P2) is in the range of 70:30 to 30:70.

A highly suitable example of a commercial halogen-free flame retardant (b) in accordance with the particular embodiment described above is the flame-retardant product sold under the trade name Phlamoon^{®}-1090A, produced and supplied by SULI.

The amount of the halogen-free flame retardant (b) refers to the amount, based on the overall weight of the polypropylene composition, of the halogen-free flame retardant (b) as supplied by the producer thereof. Accordingly, the halogen-free flame retardant (b) may contain further components in minor amounts, like additives, flame retardant synergists and/or carrier medium. It is to be understood that such further components are calculated to the amount of the halogen-free flame retardant (b).

In an embodiment, the halogen-free flame retardant (b) comprises from 35 to 40 wt.-% of melamine polyphosphate and from 50 to 60 wt.-% of piperazine pyrophosphate, based on the total amount (100 wt.-%) of the halogen-free flame retardant (b).

### Pigment (c)

The polypropylene composition of the present disclosure comprises (c) 0.2 to 2.0 wt.-% of a pigment, based on the total amount (100 wt.-%) of the polypropylene composition. Preferably, the polypropylene composition comprises 0.3 to 1.5 wt.-%, in particular 0.4 to 1.3 wt.-% of a pigment based on the total amount (100 wt.-%) of the polypropylene composition.

In order to provide the contents of the pigments as defined above, the pigment is preferably incorporated into the polypropylene composition as a pigment masterbatch. The pigment masterbatch preferably comprises the pigment and at least one pigment carrier polymer. In an embodiment, the pigment carrier polymer may be a homo- or copolymer of propylene.

The pigment may be an organic pigment and/or carbon black. When the pigment is an organic pigment, it is preferably a phthalocyanine pigment. For example, when the pigment is an organic pigment, it may be selected from a phthalocyanine green pigment, a phthalocyanine blue pigment and combinations thereof.

It is hypothesized that the improvement of UV performance through use of an acid scavenger is even more notable in case the polypropylene composition contains an organic pigment.

Especially organic pigments are sensitive towards acids and the addition of calcium stearate helps to decrease acidity and prevents the pigments from fading.

### Additives (d)

The polypropylene composition of the present disclosure comprises (d) 0.2 to 5.0 wt.-% of additives, based on the total amount (100 wt.-%) of the polypropylene composition. In some embodiment, the polypropylene composition of the present disclosure may comprise (d) 0.25 to 2.50 wt.-% of additives, preferably 0.5 to 2.0 wt.-% of additives based on the total amount (100 wt.-%) of the polypropylene composition. Within the terms of the present disclosure additives are all compounds that are included in a content of equal to or less than 5 wt.-% based on the total amount (100 wt.-%) of the polypropylene composition and apart from adhesion promoter, pigment and/or pigment carrier polymer.

### Ester-HALS (d1)

The polypropylene composition of the present disclosure comprises (d1) 0.1 to 1.0 wt.-% of at least one ester-group-containing HALS (ester-HALS), based on the total amount (100 wt.-%) of the polypropylene composition.

The hindered amine light stabiliser (d1) is present in an amount of from 0.1 to 1.0 wt.-%, for instance, from 0.2 to 1.0 wt.-%, e.g., from 0.3 to 0.8 wt.-%, or from 0.4 to 0.7 wt.-%, based on the total amount (100 wt.-%) of the polypropylene composition.

The hindered amine light stabilizer (HALS) is selected from ester-group-containing HALS.

In an embodiment, the ester-group-containing HALS has the following formula (I) 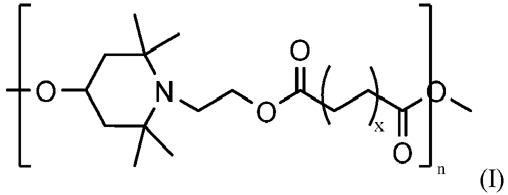 wherein x is 1 to 4 and n is 1 to 10, preferably, x is 1 or 2 and n is 4 to 10.

In one embodiment, the HALS contains at least two ester groups. Furthermore, it is preferred if the HALS (d1) contains one or more 2,2,6,6-substituted piperidine moieties or one or more 2,2-substituted piperazine moiety. In an embodiment, the HALS contains at least two 2,2,6,6-substituted piperidine moieties. Preferably, the HALS comprises more than two moieties of 2,2,6,6-substituted piperidine.

In an embodiment, the HALS (d1) is a polymeric hindered amine compound. "Polymeric hindered amine compound" herein means that the hindered amine compound has more than two piperidine moieties containing repeating units which bear substituents at least at 2,2,6,6-position.

Preferably, the HALS (d1) has a weight average molecular weight, M_{w}, of 400 g/mol. Particularly preferred the HALS (d1) has a weight average molecular weight, M_{w}, of 2.000 g/mol or more, e.g., from 2.000 to 7.000 g/mol, for instance, from 2.000 to 5.000 g/mol, or from 2.500 to 4.500 g/mol.

HALS containing at least one ester group in accordance with the present disclosure are commercially available and supplied, for instance, by BASF, Sigma-Aldrich, Ciba and Cytec.

In an embodiment, the HALS (d1) comprises at least one of an ester-group-containing HALS selected from a dimethyl succinate 4-hydroxy-2,2,6,6-tetramethyl-1-piperidineethanol polymer having a weight average molecular weight M_{w} of from 2.000 to 7.000 g/mol, a 2,2,6,6-tetramethylpiperidin-4-yl-alkanoate having a chain length of from 11 to 18 C atoms and combinations thereof. More preferably, the HALS (d1) is a dimethyl succinate 4-hydroxy-2,2,6,6-tetramethyl-1-piperidineethanol polymer having a weight average molecular weight M_{w} of from 2.000 to 7.000 g/mol (CAS: 65447-77-0) or a mixture of at least two different 2,2,6,6-tetramethylpiperidin-4-yl-alkanoates having a chain length of from 11 to 18 C atoms (CAS: 86403-32-9 / 167078-06-0).

### Acid scavenger (d2)

The polypropylene composition of the present disclosure comprises (d2) 0.1 to 1.0 wt.-% of at least one acid scavenger, based on the total amount (100 wt.-%) of the polypropylene composition.

Suitable acid scavengers (d2) include hydrotalcites, zinc oxide, and C11 to C20 alkyl carboxylates, e.g., stearates. In an embodiment, the acid scavenger (d2) comprises at least one stearate selected from the group consisting of magnesium stearate, calcium stearate, strontium stearate, barium stearate, and zinc stearate. In a particular embodiment, the acid scavenger (d2) is calcium stearate (CAS: 1592-23-0).

### UV absorber comprising phenolic hydroxyl groups (d3)

The polypropylene composition of the present disclosure optionally comprises (d3) 0.1 to 0.8 wt.-% of at least one UV absorber comprising phenolic hydroxyl groups, based on the total amount (100 wt.-%) of the polypropylene composition. Preferably, the polypropylene composition comprises 0.2 to 0.7 wt.-% of at least one UV absorber comprising phenolic hydroxyl groups, based on the total amount (100 wt.-%) of the polypropylene composition.

In a particular embodiment, the at least one UV absorber comprising phenolic hydroxyl groups (d3) is selected from 2-hydroxy-4-n-octoxybenzophenone (CAS: 1843-05-6), 2-(4,6-bis-(2,4-dimethylphenyl)-1,3,5-triazin-2-yl)-5-(octyloxy)-phenol (CAS: 2725-22-6) and hexadecyl-3,5-bis-tert-butyl-4-hydroxybenzoate (CAS: 67845-93-6).

### Antioxidant (d4)

The polypropylene composition of the present disclosure optionally comprises (d4) 0.1 to 0.5 wt.-% of at least one antioxidant, based on the total amount (100 wt.-%) of the polypropylene composition.

In an embodiment, the antioxidant (d4) is a di(C8-C30)alkyl amine compound optionally bearing a further substituent, e.g., a long chain N,N-dialkylhydroxylamine compound of the formula R1R2NOH (II), wherein R1 and R2 are independently selected from an alkyl group of 8 to 30 carbon atoms. In an embodiment, the antioxidant (d4) is a di((C10-C25)alkyl)hydroxyl amine compound, preferably a di((C15-C22)alkyl)hydroxyl amine compound.

A suitable example of the antioxidant (d4) of the invention is bis(octadecyl)hydroxylamine (CAS: 143925-92-2).

In a further preferred embodiment, the at least one antioxidant (d4) is selected from the group consisting of phenolic antioxidants and phosphorus-containing antioxidants. In particular, the at least one antioxidant (d4) may be selected from octadecyl 3-(3,5-di-tert-butyl-4-hydroxyphenyl)-propionate (CAS: 2082-79-3) 2,6-di-tert-butyl-4-methylphenol (CAS: 128-37-0), pentaerithrityl-tetrakis(3-(3',5'-di-tert-butyl-4-hydroxyphenyl)-propionate) (CAS: 6683-19-8), bis(2,4-di-tert.butylphenyl)-pentaerithrityl-di-phosphite (CAS 26741-53-7) and tris (2,4-di-t-butylphenyl)-phosphite (CAS: 31570-04-4). Among those, octadecyl 3- (3,5-di-tert-butyl-4-hydroxyphenyl)-propionate (CAS: 2082-79-3) and tris (2,4-di-t-butylphenyl)-phosphite (CAS: 31570-04-4) are particularly preferred antioxidants (d4).

Antioxidant(s) (d4) of the invention are commercially available and supplied, for instance, by BASF and Sigma-Aldrich.

### Metal deactivator (d5)

The polypropylene composition of the present disclosure optionally comprises (d5) 0.1 to 0.5 wt.-% of at least one metal deactivator, based on the total amount (100 wt.-%) of the polypropylene composition. The metal deactivator may be an organic metal deactivator. The metal deactivator preferably exerts its effect by deactivating metal ions, that may be introduced into the polypropylene composition by talc and/or other additives.

Accordingly, in the broadest sense, the organic metal deactivator is a complexing agent that is capable of deactivating or reducing the ability of metal ions, like iron ions or copper ions, to initiate or catalyse the degradation of a polymer or of an additive part of a polymer composition (IUPAC, 1996). Thus, it is preferred that the organic metal deactivator comprises at least one, preferably, two -C(O)-NH-groups.

Examples of organic metal deactivator are 2,2'-oxamido-bis-(ethyl-3-(3,5-di-tert-butyl-4-hydroxyphenyl)-propionate) (CAS: 70331-94-1), N,N'-bis-(3(3',5'-di-tert-butyl-4'-hydroxyphenyl)propionyl)hydrazine (CAS: 32687-78-8), oxalyl-bis-(benzylidenehydrazide) (CAS: 6629-10-3), 2,5-bis-(2-(3-(3,5-di-tert-butyl-4-hydroxyphenyl)propionylamido)ethyl-amino)-benzoquinone, tris-(2-tert-butyl-4-thio-(2'-methyl-4'-hydroxy-5'-tert-butyl)phenyl-5-methyl)-phenylphosphite (CAS: 36339-47-6) and decamethylene-dicarboxy-di-salicyloyl-hydrazide (CAS: 63245-38-5). An especially preferred organic metal deactivator is N,N'-bis-(3-(3',5'-di-tert-butyl-4'-hydroxyphenyl)propionyl)hydrazine (CAS: 32687-78-8) and/or 2,2'-oxamido-bis-(ethyl-3-(3,5-di-tert-butyl-4-hydroxyphenyl)-propionate) (CAS: 70331-94-1).

In a particular embodiment, the metal deactivator (d5) is 2,2'-oxamido-bis-(ethyl-3-(3,5-di-tert-butyl-4-hydroxyphenyl)-propionate) (CAS: 70331-94-1).

### Nucleating Agent (d6)

The polypropylene composition of the present disclosure may further comprise (d6) 0.1 to 1.2 wt.-%, preferably 0.25 to 1.0 wt. % of a nucleating agent, based on the total amount (100 wt.-%) of the polypropylene composition.

In a preferred embodiment, the nucleating agent may be an inorganic nucleating agent, e.g. a mineral nucleating agent. For example, the nucleating agent may comprise or consists of a IUPAC group 2 metal compound, such as calcium carbonate or talc.

The term "talc" used in accordance with the present invention refers to a wide range of natural minerals with a high magnesium silicate content (*e.g*. corresponding to more than about 909 of MgO+SiO₂). Most commercial talc grades are believed to be suitable for use according to the invention, although those having a small particle size and a uniform particle size distribution are preferred.

### Article

The present disclosure further provides an article comprising the polypropylene composition of the present disclosure.

In particular, the present disclosure relates to an article comprising at least 60 wt.-%, more preferably at least 80 wt.-%, still more preferably at least 90 wt.-%, like at least 95 wt.-% or at least 99 wt.-%, of the polypropylene composition of the present disclosure. In an especially preferred embodiment, the present invention relates to an article consisting of the polypropylene composition of the present disclosure.

The article preferably is an automotive article, such as an automotive article in the field of electronic components such as an electric cable insulation, housings of electric devices, containers and parts of power electronic components of automobile parts and home electric appliance parts, and the like.

In an embodiment, the article of the present disclosure forms part of or constitutes an electric cable insulation, such as a battery housing, a housing of an electric device, a container, or a component of power electronics of an automobile or a home electric appliance.

### Use

The present disclosure also relates to the use of a combination of (i) ester-group-containing HALS (ester-HALS) and (ii) acid scavenger to improve the UV stability of a polypropylene composition comprising halogen-free flame retardant containing nitrogen and phosphorus. In an embodiment, the aforementioned combination of compounds is used for a polypropylene composition additionally comprising an organic pigment, e.g., a phthalocyanine pigment. A pronounced improvement shows if the combination of ester- HALS and acid scavenger is used for the UV stabilization of a polypropylene composition reinforced with glass-fibres, i.e., it additionally comprising glass fibres and an adhesion promoter. Likewise, good effects are observed if the combination of ester- HALS and acid scavenger is used for the UV stabilization of a polypropylene composition additionally comprising at least one UV absorber comprising phenolic hydroxyl groups.

In some embodiments, the ester- HALS (i) is selected from a dimethyl succinate 4-hydroxy-2,2,6,6-tetramethyl-1-piperidineethanol polymer having a molecular weight M_{w} of from 2.000 to 7.000 g/mol (CAS: 65447-77-0) and a mixture of 2,2,6,6-tetramethylpiperidin-4-yl-alkanoates having a chain length of from 11 to 18 C atoms (CAS: 86403-32-9 / 167078-06-0).

In some embodiments, the acid scavenger (ii) is selected from hydrotalcites, zinc oxide, and C11 to C20 alkyl carboxylates, e.g., stearates. In some embodiments, the acid scavenger (ii) comprises at least one stearate selected from the group consisting of magnesium stearate, calcium stearate, strontium stearate, barium stearate, and zinc stearate. In a particular embodiment, the acid scavenger (ii) is calcium stearate (CAS: 1592-23-0).

In a particular embodiment, a combination of (i) a dimethyl succinate 4-hydroxy-2,2,6,6-tetramethyl-1-piperidineethanol polymer having a molecular weight M_{w} of from 2.000 to 7.000 g/mol (CAS: 65447-77-0) and (ii) calcium stearate (CAS: 1592-23-0) is used.

In another particular embodiment, a combination of (i) a mixture of 2,2,6,6-tetramethyl-piperidin-4-yl-alkanoates having a chain length of from 11 to 18 C atoms (CAS: 86403-32-9/ 167078-06-0) and (ii) calcium stearate (CAS: 1592-23-0) is used.

### Examples

A series of glass-fibre-filled polypropylene compositions was produced using as a base polymer a low viscosity polypropylene compound (BJ400HP, Borealis AG) having a density of 908 kg/m³ (measured according to ISO1183), a Melt Flow Rate (230 °C, 2.16 kg) of 100 g/10min (measured according to ISO 1133), a Flexural Modulus (2 mm/min) of 1.500 MPa (measured according to ISO 178), a Tensile Strength (50 mm/min) of 28 MPa (measured according to ISO 527-2), a Heat Deflection Temperature (0.45 MPa) of 95 °C (measured according to ISO 75-2), a Charpy Impact Strength, notched (23 °C) of 4 kJ/m² (measured according to ISO 179/1eA), and a Charpy Impact Strength, notched (-20 °C) of 2 kJ/m² (measured according to ISO 179/1eA).

The amount of ester-HALS (HALS 1) was kept constant for all formulations, while a variation of calcium stearate concentration (inventive examples vs. comparative examples) and type of UV absorber was performed according to table 1 below. All formulations contained 30 wt.-% glass fibres (SGF, 13 µm chopped E-glass from Johns Manville Thermoflow CS EC 13 636 with 4.0 mm chopping length), 22.5 wt.-% intumescent flame retardant (Phlamoon^{®} 1090A), 1.5 wt.-% adhesion promoter (maleic anhydride-grafted PP, SCONA TPPP 8112 GA), 0.1 wt.-% AO1, 0.1 wt.-% AO2, 0.3 wt.-% MD1, 3 wt.-% phthalocyanine-based green pigment masterbatch with a pigment loading of 14 wt.-% (supplied by Audia Liqui Kolor) and the remainder up to 100 wt.-% of polypropylene compound BJ400HP.

Two further polypropylene compositions were produced as comparative examples with HALS1 but without calcium stearate. Comparative example 4 is a non-filled black-coloured polypropylene composition based on BF970MO (Borealis AG) Comparative example 5 is a glass fibre filled polypropylene composition based on BJ400HP (Borealis AG). Both compositions comprise 0.7 wt.-% of the carbon black masterbatch CBMB-LD-09 (supplied by Poly Plast Muller). The type and amounts of the further components that have been used in the production of the compositions can be looked up in table 2.

### Additives used in the formulations

### Antioxidants

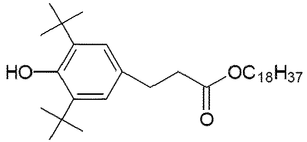

**AO1** (Irganox^{®} 1076) CAS: 2082-79-3, M_{w} 531 g/mol, Tₘ 50-55 °C 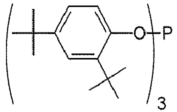
**AO2** (Irgafos^{®} 168) CAS: 31570-04-4, M_{w} 647 g/mol, Tₘ 182-186 °C
**AO3** (Irganox^{®} 1010), Pentaerithrityl-tetrakis(3-(3',5'-di-tert-butyl-4-hydroxyphenyl)-propionate), CAS: 6683-19-8

### Metal deactivator

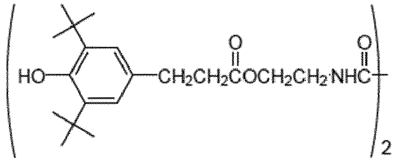

**MD1** (PALMAROLE MDA.P.10), CAS: 32687-78-8, M_{w} 553 g/mol, Tₘ 224-229 °C

### HALS

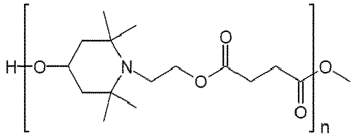

**HALS1** (Tinuvin^{®} 622), CAS: 65447-77-0, M_{w} >2.500 g/mol, Tₘ 55-70 °C

### UV absorbers

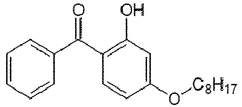

**UVa1** (Chimassorb^{®} 81) CAS: 1843-05-6, M_{w} 326 g/mol, Tm 47-49 °C 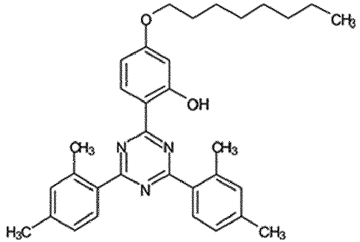
**UVa2** (Tinuvin^{®} 1164) CAS: 2725-22-6, M_{w} 509 g/mol, Tₘ 88-91 °C

### Polymeric Additives

**PTFE:** DYNEON TF 2025 Z PTFE

### Acid scavenger

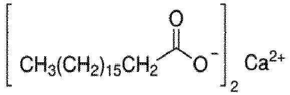

**CaSt** CAS: 1592-23-0, M_{w} 607 g/mol, Tₘ 145-160 °C

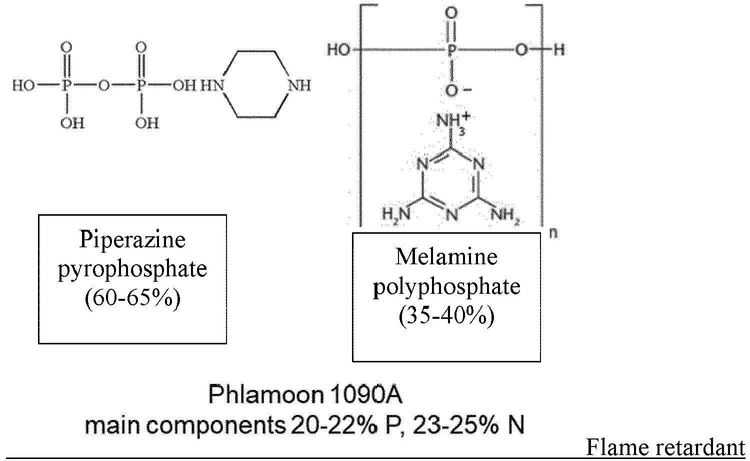

The polypropylene compositions obtained were subjected to UV weathering under wet (Florida) and dry (Kalahari) UV aging conditions. The change in colour due to the respective UV ageing conditions was measured. Furthermore, the flammability of one inventive polypropylene composition has been examined according to the standard UL-94. The outcomes of those tests are summarized in Table 1. In all cases, an improvement of UV resistance was observed.

The UV aging performance in terms of a change in colour after the respective UV ageing conditions is shown in Table 2 for glass-fibre-filled and non-filled black-coloured PP compositions containing intumescent flame retardant. The results support the hypothesis that the glass-fibre-filled polypropylene compositions allow a higher degree of water penetration into the material than non-filled polypropylene compositions due to the presence of multiple micro-defects on the surface (higher dL* values for Comparative Example 5 than for Comparative Example 4).

### Florida UV aging conditions (PV 3930):

60 W/m² (300-400 nm) irradiance, black standard temperature 65±2 °C, chamber temperature 38±3°C, relative humidity of 70%, ratio of rain cycle to UV cycle = 18 min/102min.

PV 3930 is a test method developed by Volkswagen AG that describes an accelerated weathering method which relies on the use of Xenon arc light as an illuminating source in order to characterize the aging behaviour of plastics, elastomers and folding top cloths. This norm relies on the guidelines of ASTM G155 and of ISO 4892-2.

### Kalahari UV aging conditions (PV 3929):

75 W/m² (300-400 nm) irradiance, black standard temperature 90±2 °C, chamber temperature 50±2 °C, relative humidity of 20%, no rain cycle.

PV 3929 is a test method developed by Volkswagen AG that describes an accelerated weathering method which relies on the use of Xenon arc light as an illuminating source in order to characterize the aging behaviour of plastics, elastomers and folding top cloths. This norm relies on the guidelines of ASTM G155.

### Change in colour

Change in colour has been accessed by CIELAB color space as specified by the International Commission on Illumination in 1994, such as by DL*, which is a difference in lightness/darkness value wherein a positive value represents a shift to a lighter colour and a negative value represents a shift to a darker colour; Da*, which is a difference on the red/greed axis wherein a positive value represents a shift to a redder colour and a negative value represents a shift to a greener colour, Db*, which is a difference on the yellow/blue axis wherein a positive value represent a shift to a yellower colour and a negative value represents a shift to a bluer colour, and/or DE*, which is a total colour difference value. The colour measurements were performed by colorimeter DATACOLOR DC 500 according to DIN EN ISO 11664-4.

### UL-94

UL94 Vertical burning test was performed according to UL 94: 2016.

Generally, UL 94: 2016 demands that the formulations are injection moulded in samples of 125±5 mm length, 13.0±0.5 mm width and a thickness of 0.8 to 3.2 mm. Under condition part 1, the samples must be conditioned in a constant room temperature of 23±2 °C and 50±10% humidity for 48 hours. Under condition part 2, the samples must be conditioned in an air circulating oven for 168 hours at 70 ± 1 °C and then cooled in the desiccator for at least 4 hours at room temperature, prior to testing. Testing must take place within 30 minutes of the samples being taken from the conditioning. The sample is hanged vertically in the test chamber and subjected to a first ignition for 10 sec, then a second ignition for another 10 sec. The burning time after each ignition is recorded and it is also noted if there is afterglow, burning dripping that ignites the cotton in the bottom of the chamber and if there is flames or glow up to holding clamp. Classifications are V-0, V-1, V-2 or no classification. It is appreciated that the classification is dependent on the thickness of the sample.

In the following, UL94 vertical burning test was carried out only under condition part 1 as described above, *i.e.* samples were conditioned in a constant room temperature of 23±2 °C and 50±10% humidity for 48 hours. The samples had a thickness of 1.5 mm.)

**Table 1**

| | **Example 1** | **Comparative Example 1** | **Example 2** | **Comparative Example 2** | **Example 3** | **Comparative Example 3** |
|---|---|---|---|---|---|---|
| CaSt / wt.-% | 0.5 | 0.0 | 0.5 | 0.0 | 0.5 | 0.0 |
| HALS1 / wt.-% | 0.6 | 0.6 | 0.6 | 0.6 | 0.6 | 0.6 |
| UVa1 / wt.-% | 0.3 | 0.3 | - | - | 0.3⁺ (1:1) | 0.3⁺ (1:1) |
| UVa2 / wt.-% | - | - | 0.3 | 0.3 | | |

| **1000 h Florida** | | | | | | |
|---|---|---|---|---|---|---|
| dL^{∗} | 4.51± 0.29 | 8.86± 0.42 | 6.78 ± 0.53 | 8.47 ± 0.49 | 5.92 ± 0.11 | 7.28 ± 0.45 |
| Da^{∗} | 8.32± 0.68 | 20.67± 0.88 | 15.92 ± 0.8 | 17.19 ± 0.85 | 14.64 ± 0.85 | 16.85 ± 0.79 |
| Db^{∗} | -3.55± 0.41 | -10.63± 0.42 | -9.42 ± 0.5 | -10.22 ± 0.44 | -8.33 ± 0.49 | -9.89 ± 0.44 |
| dE^{∗} | 10.11± 0.78 | 24.87± 1.04 | 19.71 ± 1.02 | 21.73 ± 0.99 | 17.85 ± 0.94 | 20.85 ± 1.00 |

| **1000 h Kalahari** | | | | | | |
|---|---|---|---|---|---|---|
| dL^{∗} | 2.16± 0.19 | -13.98± 1.06 | 0.26 ± 0.43 | -11.39 ± 1.00 | 0.61 ± 0.16 | -12.07 ± 2.19 |
| Da^{∗} | 12.93± 0.76 | 43.0 ± 1.32 | 14.28 ± 0.78 | 34.05 ± 1.02 | 13.16 ± 0.57 | 37.85 ± 2.88 |
| Db^{∗} | -3.33± 0.18 | -8.41± 0.47 | -4.40 ± 0.13 | -5.84 ± 0.13 | -4.02 ± 0.24 | -7.89 ± 0.54 |
| dE^{∗} | 13.53± 0.75 | 45.99± 1.61 | 14.95 ± 0.76 | 36.38 ± 1.27 | 13.78 ± 0.6 | 40.52 ± 3.45 |
| UL-94 | V0 | n.d. | n.d. | n.d. | n.d. | n.d. |

| | | | | | | |
|---|---|---|---|---|---|---|
| n. d. - not determined ⁺ Mixture of UVa1 and UVa2 in a weight ratio of 1:1 | | | | | | |

**Table 2**

| | **Non-filled material** | **GF-filled material** |
|---|---|---|
| | **Comparative Example 4** | **Comparative Example 5** |
| PP / wt.-% | 72.1⁺⁺ | 43.3⁺⁺⁺ |
| Phlamoon^{®} 1090A / wt.-% | 25 | 22.5 |
| PTFE / wt.-% | 0.2 | - |
| Glass fibres / wt.-% | - | 30 |
| Adhesion promoter / wt.-% | - | 1.5 |
| AO3 / wt.-% | 0.1 | 0.1 |
| AO2 / wt.-% | 0.1 | 0.1 |
| MD 1 / wt.-% | 0.25 | 0.25 |
| HALS1 / wt.-% | 0.3 | 0.3 |
| UVa1 / wt.-% | 0.15 | 0.15 |

| **1000h Florida** | | |
|---|---|---|
| dL* | 0.63 | 2.07 |

| **1000h Kalahari** | | |
|---|---|---|
| dL* | 0.05 | 0.82 |

| | | |
|---|---|---|
| ⁺⁺ BF970MO, commercially available from Borealis AG, Austria ⁺⁺⁺BJ400HP, commercially available from Borealis AG, Austria | | |

## Claims

1. A polypropylene composition comprising
(a) 20 to 75 wt.-% of a polymer of propylene,
(b) 20 to 30 wt.-% of a halogen-free flame retardant containing nitrogen and phosphorus,
(c) 0.2 to 2.0 wt.-% of a pigment, and
(d) 0.2 to 5 wt.-% of additives,
based on the total amount of the polypropylene composition;
wherein the additives (d) comprise
(d1) 0.1 to 1.0 wt.-% of at least one hindered amine light stabilizer (HALS) containing at least one ester-group, and
(d2) 0.1 to 1.0 wt.-% at least one acid scavenger,
based on the total amount of the polypropylene composition.

2. The polypropylene composition of claim 1, wherein (a) the polymer of propylene is a heterophasic copolymer of propylene, preferably a heterophasic copolymer of propylene comprising
- a polypropylene matrix component (a1) and
- an elastomeric propylene copolymer component (a2) which is dispersed in said polypropylene matrix (a1) and comprises units derived from (i) propylene and (ii) ethylene and/or a C4 to C20 olefin.

3. The polypropylene composition of claim 1 or 2, wherein (a) the polymer of propylene is a heterophasic copolymer of propylene having a melt flow rate MFR₂ (230 °C/2.16 kg), measured according to ISO 1133, in the range of from 10 to 200 g/10min, preferably in the range of from 60 to 200 g/10 min.

4. The polypropylene composition of any one of claims 1 to 3, further comprising
(aa) 10 to 50 wt.-%, based on the total amount of the polypropylene composition, of glass fibres,
preferably short glass fibres having a nominal fibre diameter of from 9 to 15 µm.

5. The polypropylene composition of claim 4, further comprising
(ab) 1 to 5 wt.-%, based on the total amount of the polypropylene composition, of an adhesion promoter, wherein the adhesion promoter is a polypropylene homo- or copolymer grafted with maleic anhydride.

6. The polypropylene composition of any one of claims 1 to 5, wherein (b) the halogen-free flame retardant containing nitrogen and phosphorus has at least one nitrogen containing moiety and at least one phosphorus containing moiety,
wherein the at least one nitrogen containing moiety is preferably selected from the group consisting of ammonium, piperazine, melamine, diamine, amide, derivatives and combinations thereof and/or
wherein the at least one phosphorus containing moiety is preferably selected from the group consisting of phosphate, e.g. orthophosphate; diphosphate; polyphosphate or pyrophosphate, phosphoric acid, polyphosphoric acid, phosphinic acid, phosphorus pentoxide, derivatives and combinations thereof.

7. The polypropylene composition of any one of claims 1 to 6,
wherein (b) the halogen-free flame retardant comprises from 35 to 40 wt.-% of melamine polyphosphate and from 50 to 60 wt.-% of piperazine pyrophosphate, based on the total amount of the halogen-free flame retardant.

8. The polypropylene composition of any one of claims 1 to 7,
wherein (c) the pigment is an organic pigment and/or carbon black,
wherein, when the pigment is an organic pigment, it is preferably selected from a phthalocyanine green pigment and a phthalocyanine blue pigment.

9. The polypropylene composition of any one of claims 1 to 8, wherein (d1) the HALS containing at least one ester-group has the following formula (I) 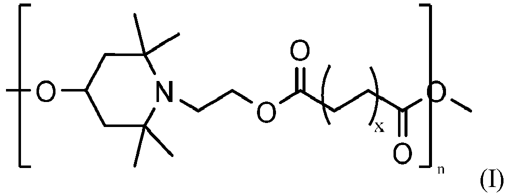 wherein x is 1 to 4 and n is 1 to 10, preferably, x is 1 or 2 and n is 4 to 10.

10. The polypropylene composition of any one of claims 1 to 9, wherein (d1) the HALS containing at least one ester-group is selected from a dimethyl succinate 4-hydroxy-2,2,6,6-tetramethyl-1-piperidineethanol polymer having a weight average molecular weight M_{w} of from 2.000 to 7.000 g/mol (CAS: 65447-77-0) and a mixture of 2,2,6,6-tetramethylpiperidin-4-yl-alkanoates having a chain length of from 11 to 18 C atoms (CAS: 86403-32-9 / 167078-06-0).

11. The polypropylene composition of any one of claims 1 to 10, wherein (d2) the acid scavenger is calcium stearate (CAS: 1592-23-0).

12. The polypropylene composition of any one of claims 1 to 11, further comprising (d3) 0.1 to 0.8 wt.-%, based on the total amount of the polypropylene composition, of at least one UV absorber comprising phenolic hydroxyl groups, wherein the at least one UV absorber comprising phenolic hydroxy groups is preferably selected from 2-hydroxy-4-n-octoxybenzophenone (CAS: 1843-05-6), 2-(4,6-bis-(2,4-dimethylphenyl)-1,3,5-triazin-2-yl)-5-(octyloxy)-phenol (CAS: 2725-22-6), and hexadecyl-3,5-bis-tert-butyl-4-hydroxybenzoate (CAS: 67845-93-6).

13. The polypropylene composition of any one of claims 1 to 12, further comprising at least one of (d4) 0.1 to 0.5 wt.-%, based on the total amount of the polypropylene composition, of at least one antioxidant and (d5) 0.1 to 0.5 wt.-%, based on the total amount of the polypropylene composition, of at least one metal deactivator, wherein the at least one antioxidant is preferably selected from octadecyl 3-(3,5-di-tert-butyl-4-hydroxyphenyl)propionate (CAS: 2082-79-3) and tris (2,4-di-t-butylphenyl) phosphite (CAS: 31570-04-4), and wherein the metal deactivator preferably is 2,2'-oxamido-bis-(ethyl-3-(3,5-di-tert-butyl-4-hydroxyphenyl)-propionate) (CAS: 70331-94-1).

14. An article comprising the polymer composition according to any of the preceding claims, preferably an article which forms part of or constitutes a housing of an electric device, such as a battery housing, or forms part of or constitutes an electric cable insulation, a container, or a component of power electronics of an automobile or a home electric appliance.

15. Use of a combination of (i) ester-group-containing HALS and (ii) acid scavenger to improve the UV stability of a polypropylene composition comprising a halogen-free flame retardant containing nitrogen and phosphorus.
